# EUROPEAN PATENT SPECIFICATION

(11) **EP 2 324 102 B1**
(45) Date of publication and mention of the grant of the patent: **05.12.2012**
(21) Application number: 09790839.6
(22) Date of filing: 27.07.2009
(51) Int. Cl.: C10M 165/00, C10M 167/00, C10M 175/00, C10M 177/00, C09K 5/10, C09K 5/20, C10L 10/00, B01J 13/00, C10N 30/10, C10N 40/04, C10N 40/08, C10N 40/13, C10N 40/14

(54) **FREE STANDING GELS FOR SELF-CONTAINED SLOW RELEASE ADDITIVES**
FREISTEHENDE GELE FÜR UNABHÄNGIGE ADDITIVE MIT LANGSAMER FREISETZUNG
GELS AUTONOMES POUR DES ADDITIFS À LIBÉRATION LENTE COMPLETS

(30) Priority: 28.07.2008 US 84009 P
(43) Date of publication of application: 25.05.2011
(73) Proprietor: The Lubrizol Corporation, Wickliffe, OH 44092-2298 (US)
(72) Inventor: BURRINGTON, James, D., Wickliffe OH 44092-2298 (US); SOUKUP, Barbara, L., Wickliffe OH 44092-2298 (US)
(74) Representative: Mallalieu, Catherine Louise
(86) International application number: PCT/US2009/051811
(87) International publication number: WO 2010/014528

(56) References cited:
- WO-A-2004/007653
- WO-A-2008/097823
- US-A1- 2005 137 097
- US-A1- 2008 108 531

## Description

### Field of the Invention

The present invention relates to a free standing controlled release additive gel for use with a functional fluid that can be cleanly removed from the container in which the gel is originally formed and that is self-contained in that it can retain its shape and form without the need for a containment or holding device. Furthermore, the present invention relates to a self-contained additive gel that releases, in a controlled manner, one or more additives into the functional fluids of fluid conditioning devices.

### Background of the Invention

Functional fluids degrade over time through use. The additives in the functional fluids deplete over the lifetime of the fluid in an engine or other mechanical device. Time release additives for engine oil are known. These additives are typically incorporated into thermoplastic polymers which slowly dissolve into the engine oil, see U.S. Patent 4,075,098. Time release additives have also been incorporated into polymers which are oil-permeable at elevated engine temperatures, see U.S. Patent 4,066,559.

Replenishment of desired additives into the functional fluid improves the performance of the functional fluid and the device using the functional fluid. Use of controlled release gels, as described in U.S. Patent 6,843,916, has been shown to be an effective means to replenish a lubricant with fresh additives over time. Such gels are formed by incorporating additive components into a gel matrix, which results in the interaction of a basic component and an acidic component, forming the gel. This process takes place in a forming container which the gel takes the shape of as it forms.

Additive gels of this type cannot generally be removed from the forming containers in which they are prepared without altering their form and dimensional integrity, and even if they could be removed from the forming containers intact they would not retain their shape and dimensions. The forming containers, filled with the finished gel, are generally placed in delivery devices used to contact the gel with the functional fluid being improved, containing the gel and holding its size and shape. This limitation requires the forming containers to be integrated parts of the delivery device used to contact the gels with the functional fluids they are used to improve. This makes gel manufacturing costly and complicated as the forming containers must be designed to hold the gel while it is formed and act as gel containment devices that are fully compatible with the delivery devices, functional fluids, functional fluid devices and application for which the gel is designed. Furthermore, as the forming containers become part of the delivery device, they cannot be reused, also adding to the gel manufacturing costs.
US 2008/0108531 A1 discloses an additive gel containing a viscosity modifier that control releases into a lubricant.
US 2005/0137097 A1 discloses an additive gel comprising i) at least two additives selected from the group comprising detergents, dispersants, acids, bases, over based detergent, succinated polyolefins or mixtures thereof wherein the selected additives when combined form a gel; ii) optionally at least one additive comprising viscosity modifier(s), friction modifier(s), detergent(s), cloud point depressant(s), pour point depressant(s), demulsifier(s), flow improver(s), anti static agent(s), dispersant(s), antioxidant(s), antifoam(s), corrosion/rust inhibitor(s), extreme pressure/antiwear agent(s), seal swell agent(s), lubricity aid(s), antimisting agent(s), and mixtures thereof. This results in a controlled release gel that over time releases at least one desired additive into a functional fluid when the gel is contacted with the functional fluid.

A gel that is free standing, in that it can be removed from its forming container and retains its shape and dimensional integrity, and can be inserted into a delivery device without the need for a containment device, would reduce gel manufacturing costs by allowing forming containers to be reused, and removing the requirement that forming containers must be integrated and compatible with the delivery device, functional fluid and application in mind.

### Summary of the Invention

In accordance with the present invention, it has been discovered that the free standing lubricant additive gels of the invention can provide additives to a functional fluid over time while at the same time be strong enough that it can be removed from its forming container and retains its shape and dimensional integrity, and can be inserted into a delivery device without the need for a containment device.

According to the present invention there is provided a free standing additive gel composition comprising:
a) a basic component comprising an overbased detergent;
b) an acidic component comprising
   an ashless dispersant with a total acid number greater than 15 equivalents of KOH per gram of material, or a mixture of said ashless dispersant with a maleic anhydride styrene-copolymer or ester thereof; and
c) a polyolefin mixture comprising a polyolefin, a succinated polyolefin or mixtures thereof;
   and further comprising:
d) at least one additive comprising viscosity modifier(s), friction modifier(s), detergent(s), cloud point depressant(s), pour point depressant(s), demulsifier(s), flow improver(s), anti static agent(s), dispersant(s), antioxidant(s), antifoam(s), corrosion/rust inhibitor(s), extreme pressure/antiwear agent(s), seal swell agent(s), lubricity aid(s), anti-misting agent(s), or mixtures thereof;
wherein the free standing gel has a tan delta value of less than or equal to 0.330 and a cone pen value measured by ASTM D217 using a ¼ pen of less than 75;
wherein component (a) is present from 30 to 70 %wt, component (b) is present from 5 to 25 %wt, component (c) is present from 5 to 30 %wt and component (d) is present from 1 to 50 % wt.

In another embodiment, the free standing gels of the invention result in one or more of the additives that make up component (d) selectively dissolving over time into a functional fluid when the free standing gel composition is placed in contact with the functional fluid.

In yet another embodiment, the free standing gels of any of the embodiments described above, comprises an overbased detergent, a succinimide dispersant, a succinated polyolefin, and an antifoam agent resulting in a controlled release gel that over time releases an antifoam additive into the functional fluid so as to reduce the foaming tendency and to improve stability of the fluid. In another embodiment, the gel comprises an overbased detergent, a succinimide dispersant, a succinated polyolefin, and an ashless antioxidant resulting in a controlled release gel that over time releases an antioxidant additive into the functional fluid of an engine. In another embodiment, the gel comprises an overbased detergent, a succinimide dispersant, a succinated polyolefin, and a friction modifier resulting in a controlled release gel that over time releases the friction modifier into the functional fluid so as to reduce the coefficient friction between metal parts.

In another aspect, the invention is a process for supplying one or more additives to a functional fluid comprising contacting the functional fluid with one or more of the free standing gels of the present invention.

We describe a fluid conditioning device that facilitates the contacting of a functional fluid and one or more free standing gels of any of the embodiments described above. The device may be free of any gel cup or container, partially or fully encasing the gel.

### Detailed Description

In accordance with the present invention, a free standing lubricant additive gel is provided. This free standing lubricant additive gel may be used in a process for supplying one or more desired additives to a functional fluid by contacting the functional fluid with the free standing additive gel, such that there is a controlled release of one or more desired additives to the functional fluid. The gel may also be used in a fluid conditioning device.

The present invention of a free standing controlled release additive gel can be used in any fluid conditioning device including internal combustion engines which include mobile and stationary applications; hydraulic systems; automatic transmissions; gear boxes which include manual transmissions and differentials; metalworking fluids; pumps; suspension systems; other lubricated mechanical systems; and the like. The fluid conditioning devices that can use the additive gel include, internal combustion engines, stationary engines, generators, diesel and/or gasoline engines, on highway and/or off highway engines, two-cycle engines, aviation engines, piston engines, marine engines, railroad engines, biodegradable fuel engines and the like; lubricated mechanical systems such as gear boxes, automatic transmissions, differentials, hydraulic systems and the like.

The functional fluid becomes diminished and depleted of its additives over time. The free standing additive gel is specifically formulated to meet the desired performance requirements of the functional fluid system and to condition the fluid. The present invention provides for the use of a free standing controlled release additive gel to increase the performance of the functional fluid by replenishing the depleted desired additives or introducing new desired additives to the functional fluid. Thus the functional fluid can add and/or maintain consistent performance over the functional fluid's life because the device should perform closer to optimum for a longer period of time.

The functional fluids useful to being further additized through the free standing controlled release additized gel of the present invention include gear oil, transmission oil, hydraulic fluid, engine oil, two cycle oil, metalworking fluid and the like. In one embodiment the preferred functional fluid is an engine oil. In another embodiment the preferred functional fluid is gear oil. In another embodiment the preferred functional fluid is transmission fluid. In another embodiment the preferred functional fluid is a hydraulic fluid.

The free standing additive gel dissolves into the functional fluid by contacting the additive gel with the functional fluid in the system. The free standing additive gel is positioned anywhere the additive gel will be in contact with the functional fluid. In one embodiment, the free standing additive gel is positioned anywhere that the circulating functional fluid contacts the additive gel. In one embodiment the functional fluid is an engine oil and the additive gel is positioned in the engine oil system which includes the lubricating system, filter, drain pan, oil bypass loop, canister, housing, reservoir, pockets of a filter, canister in a filter, mesh in a filter, canister in a bypass system, mesh in a bypass system, oil lines and the like. In one embodiment the functional fluid is a gear oil and the additive gel is located in the gear system which includes oil drain pan, sump, filters, a full flow or bypass oil line, lines, loop and/or filter, canisters, mesh, other spaces within the device in which a gel might be contained and the like. In one embodiment the functional fluid is transmission fluid and the additive gel is located in the transmission system which includes the space such as a hole within a transmission magnet, the oil pan, oil lines, lines, canisters, mesh and the like. In one embodiment the additive gel is located in the engine oil line, which includes a full flow filter, a by-pass filter, the oil pan, and the like. In one embodiment, the functional fluid is a hydraulic fluid and the additive gel is located in the hydraulic cylinder, sump, filter, oil lines, pan, full flow or by pass oil loop, line and/or filter, canister, mesh, other spaces in the system and the like.

One or more locations in a line, loop and/or the functional fluid system can contain the free standing additive gel. Further, if more than one free standing additive gel for the functional fluid is used each additive gel can be identical, similar and/or a different additive gel composition than the other additive gels used.

We describe a container to hold the additive gel, such as a housing, a canister or a structural mesh anywhere in the functional fluid system, for example, a canister within a bypass loop of a stationary gas engine for power generation. The necessary design feature for the container is that at least a portion of the additive gel is in contact with the functional fluid. In other embodiments, the free standing fluid additive gel is used without such a container. In still other embodiments the fluid additive gel is tethered, anchored, or other fixed to a position within the fluid system in which the functional fluid is used and so in this way is not contained within a gel cup or similar container.

The free standing additive gel needs to be in contact with the functional fluid. In one embodiment the additive gel is in contact with the functional fluid in the range of about 100% to about 1% of the functional fluid in the system, in that 15 to 100% of the functional fluid comes into physical contact with the gel during the fluid's use. In another embodiment the additive gel is in contact with the functional fluid in the range of about 75% to about 25% of the functional fluid in the system and in another embodiment the additive gel is in contact with the functional fluid in the range of about 50% of the functional fluid in the system. Generally speaking, as the flow rate of the functional fluid as it contacts the gel decreases there is less dissolution of the additive gel into the fluid, and as the flow rate increases there is greater dissolution of the additive gel.

In one embodiment, the free standing additive gel is positioned in the functional fluid system so that the additive gel and/or spent additive gel can easily be removed, and then replaced with a new and/or recycled additive gel.

The free standing additive gel is added to the system by any known method depending on the total amount of gel that is desired to be released over time, the desired form of the additive gel (e.g. stiffness, consistency, homogeneity and the like), the desired overall dissolution of the gel, the desired release rates of a specific component, the desired mode of operation and/or any combinations of the above.

The release rate of the free standing additive gel is determined primarily by the additive gel formulation. The release rate is also dependent on the mode of addition of the additive gel, the location of additive gel, flow rate of the functional fluid, the form of the additive gel (e.g., stiffness, consistency, homogeneity and the like) and the like. The free standing additive gel is positioned in a location desirable for the specified and desirable dissolution rate of the additive gel components.

While either a free standing or non-free standing additive gel may be used to control release a component to a functional fluid, a free standing gel can be used without being contained inside a form that holds the gel's shape and dimensions. A non-free standing gel is prepared in a container from which the gel cannot be removed intact. The gel and its forming device both become part of any functional fluid conditioning device the gel is used in. A free standing gel, once formed, can be removed intact from its forming device and can be placed or built into a functional fluid conditioning device without the need of integrating the forming device into the functional fluid conditioning device. In some embodiments the free standing gel can be placed into a conditioning device, or otherwise used, without any container at all. This provides the opportunity to design the gel forming or curing container separately from the fluid conditioning device, reducing manufacturing costs of the gel and the conditioning devices. In some embodiments, considered alone or in combination with one or more of the embodiments provided both above and below, the free standing gels of the present invention are brought into contact with a functional fluid without the presence of a container or holding device surrounding or otherwise containing the gel, or if any type of container or holder is used with the gel, no side wall or similar structure is present.

In some embodiments, a method of supplying one or more additives that make up the fluid additive gel to a functional fluid involves contacting the fluid and the gel wherein the gel is free of any type of gel container or cup that encompasses, either fully or partially, the gel. In some embodiments the gel may be completely free-floating within the fluid condition device, once filled with fluid, and simply contained within the device itself but not otherwise attached to or fastened to the device. In other embodiments the gel may be attached to a gel plate or similar area an/or feature located within the fluid conditioning device, but which is free of side walls, lids, or other similar structures designed to contain the gel, keep the gel in position, or maintain the gels shape or dimensional integrity.

In additional embodiments the additive gel may be described as soluble, substantially soluble, or at least partially soluble in the functional fluid with which it is used. In other embodiments the methods and compositions of the present invention are: free of any non-lubricant additive matrix material; free of any casing with any type of side wall structure designed to encase or enclose, either fully or partially, the lubricant additive gel; free of any casing around the additive with any type of fuel permeable element; free of thermostatically controlled orifices; free of baffle plates in the fluid conditioning device and/or any type of additive container; and free of any combinations thereof.

Component (a). The basic component comprises an overbased detergent.

Detergents suitable for use in component (a) include overbased sulfonates, phenates, salicylates, carboxylates, overbased calcium sulfonate detergents which are commercially-available, overbased detergents containing metals such as Mg, Ba, Sr, Na, Ca and K and mixtures thereof and the like.

Detergents are described, for example, in U.S. Patent 5,484,542. The detergents may be used alone or in combination with one another.

Component (a) may further comprise copolymers such as ethylene-propylene diene monomer (EPDM) copolymer. Suitable ethylene-propylene diene monomer (EPDM) copolymers include those with a number average molecular weight between 1x10² and 1x10⁹. In one embodiment component (a) comprises a copolymer, an overbased detergent, or a combination thereof. In one embodiment the copolymer comprises an ethylene-propylene diene monomer (EPDM) copolymer. In another embodiment the overbased detergent comprises an overbased calcium hydroxide alkylbenzenesulfonate detergent. In yet another embodiment the EPDM copolymer and the overbased calcium hydroxide alkylbenzenesulfonate detergent are used in combination with one another.

Component (a), the basic component, is present in ranges such that the weight ratio of component (a) to component (b) is, in one embodiment, 0.01 to 0.99, and in another embodiment 0.05 to 0.2. This corresponds to a range of about 1% by weight to about 100% by weight in one embodiment for the combined components (a) and (b) in the free standing additive gel, and a range of about 1% by weight to about 50% by weight in another embodiment. As to component (a) alone, the free standing additive gel may be, in one embodiment, 30% by weight to 60% by weight component (a) and in another embodiment, 40% by weight to 60% by weight component (a). In still other embodiments, component (a) is present in the free standing gel from 50 to 60 % by weight, or from 55 to 58 % by weight, or from 20 to 50 % by weight.

Component (b). The acidic component comprises an ashless dispersant with a total acid number greater than 15 equivalents of KOH per gram of material, or a mixture of said ashless dispersant with a maleic anhydride styrene-copolymer or ester thereof.

Functionalized polymers useful in the present invention include olefin copolymers and acrylate or methacrylate copolymers. Functionalized olefin copolymers can be, for instance, interpolymers of ethylene and propylene which are grafted with an active monomer such as maleic anhydride and then derivatized with an alcohol or an amine. Other such copolymers are copolymers of ethylene and propylene which are reacted or grafted with nitrogen compounds. Derivatives of polyacrylate esters are well known as dispersant viscosity index modifiers additives. Dispersant acrylate or polymethacrylate viscosity modifiers such as Acryloid™ 985 or Viscoplex™ 6-054, from RohMax, are particularly useful. Solid, oil-soluble polymers such as the PIB, methacrylate, polyakystyrene, ethylene/propylene and ethylene/propylene/1,4-hexadiene polymers, can also be used as visjcosity index improvers.

In one embodiment, the acidic component of the present invention comprises maleic anhydride styrene copolymer (MSC) and may further comprises an ashless dispersant.

The maleic anhydride styrene copolymer may be partially esterified with an alcohol where the equivalent ratio of alcohol to acid groups is in one embodiment from about 0.1 to about 0.99 and in another embodiment from 0.45 to 0.95. Appropriate alcohols for use in preparing the partially esterified maleic anhydride styrene copolymer include in one embodiment, alcohols containing 6 to 32 carbon atoms and mixtures of such alcohols, and in another embodiment, alcohols containing 8 to 18 carbon atoms and mixtures of such alcohols. Suitable maleic anhydride styrene copolymers comprise those with a total acid number (TAN), in one embodiment, greater than 1, and in another embodiment greater than 3 where TAN is in the units of equivalents of KOH per gram of material and which have a blend oil viscosity at 10% by weight oil of, in one embodiment greater than 5 mm²/s (5 cSt) at 100°C and in another embodiment greater than 10 mm²/s (10 cSt) at 100°C.

Dispersants suitable for use in component (b) include ashless dispersants such as a polyisobutenyl succinimide and the like so long as the dispersant has a total base number (TBN) greater than 13. Polyisobutenyl succinimide ashless dispersants are commercially-available products which are typically made by reacting together polyisobutylene having a number average molecular weight ("Mn") of about 300 to 10,000 with maleic anhydride to form polyisobutenyl succinic anhydride ("PIBSA") and then reacting the product so obtained with a polyamine typically containing 2 to 10 amino nitrogen groups per molecule.

Ashless type dispersants are characterized by a polar group attached to a relatively high molecular weight hydrocarbon chain. Typical ashless dispersants include N-substituted long chain alkenyl succinimides, having a variety of chemical structures including typically: 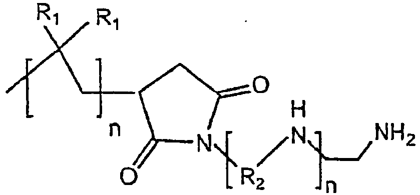 and/or 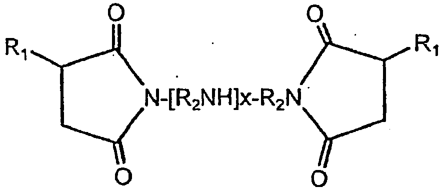 wherein each R¹ is independently an alkyl group, frequently a polyisobutyl group with a molecular weight of 500-5000, and R² are alkenyl groups, commonly ethylenyl (C₂H₄) groups. Succinimide dispersants are more fully described in U.S. Patent 4,234,435. The dispersants described in this patent are particularly effective for producing free standing gels in accordance with the present invention.

In some embodiments suitable dispersants have a TAN greater than 15 where TAN is in the units of equivalents of KOH per gram of material. In some embodiments a suitable dispersant need only have a measurable TAN while the dispersant may also have a measurable TBN, which may be small, equal to or even larger than the TAN value of the dispersant. For example, a dispersant may have a TBN of 10 or above or 15 or above and a TAN of 5 or more. In one embodiment, component (b) comprises a polyisobutenyl succinimide dispersant

Component (b), the acidic component, is present in ranges such that the weight ratio of component (a) to component (b) is typically 0.01 to 0.99, and more typically 0.05 to 0.2. This corresponds to a range of about 1% by weight to about 100% by weight in one embodiment for the combined components (a) and (b) in the free standing additive gel, and a range of about 1% by weight to about 50% by weight in another embodiment. As to component (b) alone, the free standing additive gel may be, in one embodiment, 5% by weight to 20% by weight component (b) and in another embodiment, 5% by weight to 10% by weight component (a). In other embodiment component (b) may be present in the free standing gel from 5 to 8% by weight.

Component (c). The polyolefin mixture component comprises polyolefin and succinated polyolefin. Suitable polyolefins that can be used in their succinated and non-succinated forms include olefin polymers which may be derived from polymerizable olefin monomers characterized by having one or more ethylenic unsaturated groups. They can be monoolefinic monomers such as ethylene, propylene, butene-1, isobutene and octene-1 or polyolefinic monomers (usually diolefinic monomers such as butadiene-1,3 and isoprene). Usually these monomers are terminal olefins, that is, olefins characterized by the presence of the group >C=CH₂ such as -CH=CH2. However, certain internal olefins can also serve as monomers (these are sometimes referred to as medial olefins). When such medial olefin monomers are used, they normally are employed in combination with terminal olefins to produce olefin polymers that are interpolymers. Although, the olefin polymers may also include aromatic groups (especially phenyl groups and lower alkyl and/or lower alkoxy-substituted phenyl groups such as para(tertiary-butyl)-phenyl groups) and alicyclic groups such as would be obtained from polymerizable cyclic olefins or alicyclic-substituted polymerizable cyclic olefins, the olefin polymers are usually free from such groups. Nevertheless, olefin polymers derived from such interpolymers of both 1,3-dienes and styrenes such as butadiene-1,3 and styrene or para-(tertiary butyl) styrene are exceptions to this general rule. The succinated polyolefins are prepared by reacting the above-described olefins with unsaturated dicarboxylic reactants, such as itaconic, citraconic, or maleic acids, anhydrides or esters at a temperature of 160°C up to 240°C. Maleic anhydride is a suitable unsaturated carboxylic reactant. The procedures for preparing the acylating agents are well known to those skilled in the art and have been described for example in U.S. Patent 3,412,111; and Ben et al, "The Ene Reaction of Maleic Anhydride With Alkenes", J.C.S. Perkin II (1977), pages 535-537. In one embodiment component (c) comprises polyisobutenyl succinic anhydride (PIBSA).

Component (c), the polyolefin mixture component, is present in ranges such that the weight ratio of component (c) to the combined total of components (a), (b), (c), and (d) is typically 0.001 to 0.99, and more typically 0.01 to 0.5. This corresponds to a range of 5% by weight to 30% by weight in one embodiment of component (c) in the free standing additive geL
In other embodiments component (c) is present in the free standing gel, from 5 to 15 % by weight, from 10 to 20 % by weight, or from 10 to 15 % by weight.

Component (d). The free standing additive gel contains at least one additional desired additive for controlled release into the functional fluid. These optional gel component additives include viscosity modifier(s), friction modifier(s), detergent(s), cloud point depressant(s), pour point depressant(s), demulsifier(s), flow improver(s), anti static agent(s), dispersant(s), antioxidant(s), antifoam(s), corrosion/rust inhibitor(s), extreme pressure/antiwear agent(s), seal swell agent(s), lubricity aid(s), antimisting agent(s), and mixtures thereof; resulting in a controlled release gel that over time releases the desired additive(s) into a functional fluid when the gel is contacted with the functional fluid. The desired additive component is further determined by the functional fluid formulation, performance characteristics, function and the like and what additive is desired to be added for depleted additives and/or added new depending on the desired functions.

Component (d), the component comprising one or more desired additives for controlled release is present in ranges such that the weight ratio of component (d) to the combined total of components (a), (b), (c), and (d) is in one embodiment 0.001 to 0.99, and in another embodiment 0.01 to 0.5. This corresponds to a range of 1% by weight to 50% by weight in one embodiment of component (d) in the free standing additive gel.
In other embodiments component (d) is present in the free standing gel from 1 to 40 % by weight, from 1 to 30 % by weight, from 1 to 25 % by weight, from 1 to 20 % by weight, from 1 to 20 % by weight, from 15 to 30 % by weight, and from 15 to 25 % by weight.

Antioxidants include, for example, alkyl-substituted phenols such as 2, 6-di-tertiary butyl-4-methyl phenol, phenate sulfides, phosphosulfurized terpenes, sulfurized esters, aromatic amines, diphenyl amines, alkylated diphenyl amines and hindered phenols, bis-nonylated diphenylamine, nonyl diphenylamine, octyl diphenylamine, bis-octylated diphenylamine, bis-decylated diphenylamine, decyl diphenylamine and mixtures thereof.

The antioxidant function includes sterically hindered phenols and includes but is not limited to 2,6-di-tert-butylphenol, 4-methyl-2,6-di-tert-butylphenol, 4-ethyl-2,6-di-tert-butylphenol, 4-propyl-2,6-di-tert-butylphenol, 4-butyl-2,6-di-tert-butylphenol, 4-pentyl-2-6-di-tert-butylphenol, 4-hexyl-2,6-di-tert-butylphenol, 4-heptyl-2,6-di-tert-butylphenol, 4-(2-ethylhexyl)-2,6-di-tert-butylphenol, 4-octyl-2,6-di-tert-butylphenol, 4-nonyl-2,6-di-tert-butylphenol, 4-dccyl-2,6-di-tert-butylphenol, 4-undecyl-2,6-di-tert-butylphenol, 4-dodecyl-2,6-di-tert-butylphenol, 4-tridecyl-2,6-di-tert-butylphenol, 4-tetradecyl-2,6-di-tert-butylphenol, methylene-bridged sterically hindered phenols include but are not limited to 4,4'-methylenebis(6-tert-butyl-o-cresol), 4,4-methylenebis(2-tert-amyl-o-cresol), 2,2-methylenebis(4-metyl-6-tert-butylhenol), 4,4-methylene-bis(2,6-di-tertburtylphenol) and mixtures thereof.

Another example of an antioxidant is a hindered, ester-substituted phenol, which can be prepared by heating a 2,6-dialkylphenol with an acrylate ester under based conditions, such as aqueous KOH. Antioxidants may be used alone or in combination.

The extreme pressure/anti-wear agents include a sulfur or chlorosulphur EP agent, a chlorinated hydrocarbon EP agent, or a phosphorus EP agent, or mixtures thereof. Examples of such EP agents are chlorinated wax, organic sulfides and polysulfides, such as benzyldisulfide, bis-(chlorobenzyl) disulfide, dibutyl tetrasulfide, sulfurized sperm oil, sulfurized methyl ester of oleic acid sulfurized alkylphenol, sulfurized dispentene, sulfurized terpene, and sulfurized Diels-Alder adducts; phosphosulfurized hydrocarbons, such as the reaction product of phosphorus sulfide with turpentine or methyl oleate, phosphorus esters such as the dihydrocarbon and trihydrocarbon phosphate, i.e., dibutyl phosphate, diheptyl phosphate, dicyclohexyl phosphate, pentylphenyl phosphate; dipentylphenyl phosphate, tridecyl phosphate, distearyl phosphate and polypropylene substituted phenol phosphate, metal thiocarbamates, such as zinc dioctyldithiocarbamate and barium heptylphenol diacid, such as zinc dicyclohexyl phosphorodithioate and the zinc salts of a phosphorodithioic acid combination may be used and mixtures thereof. The EP / antiwear agent can be used alone or in combination.

The antifoams include organic silicones such as poly dimethyl siloxane, poly ethyl siloxane, polydiethyl siloxane, polyacrylates and polymethacrylates, trimethyl-triflouro-propylmethyl siloxane and the like. The antifoams may be used alone or in combination.

The viscosity modifier provides both viscosity improving properties and dispersant properties. Examples of dispersant-viscosity modifiers include vinyl pyridine, N-vinyl pyrrolidone and N,N'-dimethylaminoethyl methacrylate are examples of nitrogen-containing monomers and the like. Polyacrylates obtained from the polymerization or copolymerization of one or more alkyl acrylates also are useful as viscosity modifiers.

Functionalized polymers can also be used as viscosity modifiers. Among the common classes of such polymers are olefin copolymers and acrylate or methacrylate copolymers. Functionalized olefin copolymers can be, for instance, interpolymers of ethylene and propylene which are grafted with an active monomer such as maleic anhydride and then derivatized with an alcohol or an amine. Other such copolymers are copolymers of ethylene and propylene which are reacted or grafted with nitrogen compounds. Derivatives of polyacrylate esters are well known as dispersant viscosity index modifiers additives. Dispersant acrylate or polymethacrylate viscosity modifiers such as Acryloid™ 985 or Viscoplex™ 6-054, from RohMax, are particularly useful. Solid, oil-soluble polymers such as the PIB, methacrylate, polyalkystyrene, ethylene/propylene and ethylene/propylene/1,4-hexadiene polymers, can also be used as visjcosity index improvers. The viscosity modifiers are known and commercially available. The viscosity modifiers may be used alone or in combination.

The friction modifiers include organo-molybdenum compounds, including molybdenum dithiocarbamate, and fatty acid based materials, including those based on oleic acid, including glycerol mono oleate (GMO), those based on steric acid, and the like. The friction modifiers can be used alone or in combination.

The anti-misting agents include very high (>100,000Mn) polyolefins such as 1.5 Mn polyisobutylene (for example the material of the trades name Vistanex^{®}), or polymers containing 2-(N-acrylamido)-2-methyl propane sulfonic acid (also known as AMPS^{®}), or derivatives thereof, and the like. The anti-misting agents can be used alone or in combination.

The corrosion inhibitors include alkylated succinic acids and anhydrides derivatives thereof, organo phosphonates and the like. The rust inhibitors may be used alone or in combination.

The metal deactivators include derivatives of benzotriazoles such as tolyltriazole, N,N-bis(heptyl)-ar-methyl-1H-benzotriazole-1-methanamine, N,N-bis(nonyl)-ar-methyl-1H-benzotriazole-1-methanamine, N,N-bis(decyl)ar-methyl-1H-benzotriazole-1-methanamine, N,N-(undecyl)ar-methyl-1H-benzotriazole-1-methanamine, N,N-bis(dodecyl)ar-methyl-1H-benzotriazole-1-methanamine N,N-bis(2-ethylhexyl)-ar-methyl-1H-benzotriazole-1-methanamine and mixtures thereof. In one embodiment the metal deactivator is N,N-bis(1-ethylhexyl)ar-methyl-1H-benzotriazole-1-methanamine; 1,2,4-triazoles, benzimidazoles, 2-alkyldithiobenzimidazoles; 2-alkyldithiobenzothiazoles; 2-N,N-dialkyldithio-carbamoyl)benzothiazoles; 2,5-bis(alkyl-dithio)-1,3,4-thiadiazoles such as 2,5-bis(tert-octyldithio)-1,3,4-thiadiazole 2,5-bis(tert-nonyldithio)-1,3,4-thiadiazole, 2,5-bis(tert-decyldithio)-1,3,4-thiadiazole, 2,5-bis(tert-undecyldithio)-1,3,4-thiadiazole, 2,5-bis(tert-dodecyldithio)-1,3,4-thiadiazole, 2,5-bis(tert-tridecyldithio)-1,3,4-thiadiazole, 2,5-bis(tert-tetradecyldithio)-1,3,4-thiadiazole, 2,5-bis(tert-octadecyldithio)-1,3,4-thiadiazole, 2,5-bis(tert-nonadecyldithio)-1,3,4-thiadiazole, 2,5-bis(tert-eicosyldithio)-1,3,4-thiadiazole and mixtures thereof; 2,5-bis(N,N-dialkyldithiocarbamoyl)-1,3,4-thiadiazoles; 2-alkydithio-5-mercapto thiadiazoles; and the like. The metal deactivators may be used alone or in combination.

The demulsifiers include polyethylene oxide and polypropylene oxide copolymers and the like. The demulsifiers may be used alone or in combination.

The lubricity aids include glycerol monooleate, sorbitan monooleate and the like. The lubricity additives may be used alone or in combination.

The flow improvers include ethylene vinyl acetate copolymers and the like. The flow improvers may be used alone or in combination.

The cloud point depressants include alkylphenols and derivatives thereof, ethylene vinyl acetate copolymers and the like. The cloud point depressants may be used alone or in combination.

The pour point depressants include alkylphenols and derivatives thereof, ethylene vinyl acetate copolymers and the like. The pour point depressant may be used alone or in combination.

The seal swell agents include organo sulfur compounds such as thiophene, 3-(decyloxy)tetrahydro-1, 1-dioxide (i.e. 3-decyloxy sulfolane) and the like. The seal swell agents may be used alone or in combination.

Component (d) may comprise dispersants and detergents such as those described in regards to components (a) and (b). In addition, component (d) may also comprise additional types of dispersants. These additional types of dispersants include Mannich dispersants, carboxylic dispersants, amine dispersants, and polymeric dispersants.

The Mannich dispersant are the reaction products of alkyl phenols in which the alkyl group contains at least about 30 carbon atoms with aldehydes (especially formaldehyde) and amines (especially polyalkylene polyamines). Mannich bases having the following general structure (including a variety of different isomers and the like) are especially interesting. 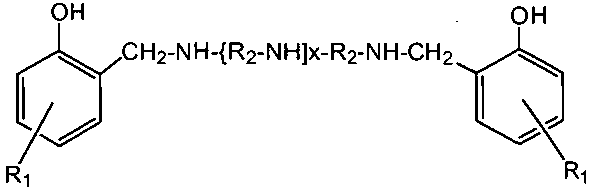 and/or

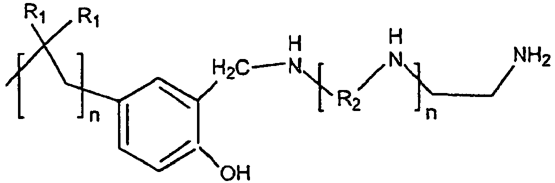

Another class of dispersants is carboxylic dispersants. Examples of these "carboxylic dispersants" are described in Patent U.S. Patent 3,219,666.

Amine dispersants are reaction products of relatively high molecular weight aliphatic halides and amines, preferably polyalkylene polyamines. Examples thereof are described, in U.S. Patent 3,565,804.

Polymeric dispersants are interpolymers of oil-solubilizing monomers such as decyl methacrylate, vinyl decyl ether and high molecular weight olefins with monomers containing polar substituents, e.g., amino alkyl acrylates or acylamides and poly-(oxyethylene)-substituted acrylates. Examples of polymer dispersants thereof are disclosed in the following U.S. Patents: 3,329,658, and 3,702,300.

Dispersants can also be post-treated by reaction with any of a variety of agents. Among these are urea, thiourea, dimercaptothiadiazoles, carbon disulfide, aldehydes, ketones, carboxylic acids, hydrocarbon-substituted succinic anhydrides, nitriles, epoxides, boron compounds, and phosphorus compounds.

Optionally, other components can be added to the additive gel which includes base stock oils, inert carriers, dyes, bacteriostatic agents, solid particulate additives, and the like so long as the free standing additive gel is maintained.

In some embodiments the gels of the present invention are free from thermoplastic polymers. In such embodiments the gels of the present invention may be substantially free of thermoplastic polymers or completely free of thermoplastic polymers.

The gel exists in a semi-solid state more like a solid than a liquid, see Parker, Dictionary of Scientific and Technical Terms, Fifth Edition, McGraw Hill, © 1994. See, also, Larson, "The Structure and rheology of Complex Fluids", Chapter 5, Oxford University Press, New York, New York, © 1999.
The rheological properties of a gel can be measured by small amplitude oscillatory shear testing. This technique measures the structural character of the gel and produces a term called the storage modulus which represents storage of elastic energy and the loss modulus which represents the viscous dissipation of that energy. The ratio of the loss modulus/storage modulus, which is called the loss tangent, or "tan delta", is >1 for materials that are liquid-like and <1 for materials that are solid-like. The free standing additive gels of the present invention have tan delta values in one embodiment of about ≤ 0.33, in another embodiment of about ≤ 0.25 and in another embodiment of about ≤ 0.21. The gels have tan delta values in one embodiment of about 0.1 to 0.33, in one embodiment of about 0.15 to 0.33, in one embodiment of about 0.20 to 0.33 or in one embodiment of about 0.21 to 0.33. In other embodiments, the gels of the present invention have tan delta values of about 0.33 and/or 0.21.

Another means of evaluating the firmness or stiffness of an additive gel is to measure its cone penetration value, or cone pen. Cone pens may be measured by ASTM D217 and ASTM D 1403 and these test methods are often used to test the stiffness and consistency of greases. These test procedures involve measuring the amount of penetration a specifically sized and contoured cone reaches in a sample of material after a specified period of time. The smaller the cone pen value, the more stiff and/or firm the fluid additive gel. The free standing additive gels of the present invention have cone pen values, measured by ASTM D 217 using a ¼ pen, as referred to in the procedure, from about 40 to about 75, in another embodiment from about 40 to about 70, and in another embodiment from about 45 to about 70. The gels have cone pen values in one embodiment of about ≤ 75, in one embodiment of about ≤ 70, in one embodiment of about ≤ 50. These cone pen values are in tenths of millimeters and are not adjusted for scale.

A gel is described as "free standing" when, after it is has been prepared, it is firm and solid-like enough that it can retain its shape and dimensions when removed from, and no longer supported by, a container or device, such as the container in which the gel was prepared. In some embodiments the gel retains these free-standing qualities indefinitely, in other embodiments the gel retains these qualities for at least 6 hours, for at least 1 hour, or for at least 15 minutes.

The TBN of the overbased detergent which participates in the gel-forming matrix, is normally at least 200, more typically at 300-1,000 and most typically 350 to 650. Where mixtures of overbased detergents are used, at least one should have a TBN value within these ranges. However, the average TBN of these mixtures may also correspond to these values.

The additive gel typically contains small amounts (about 5-40%) of base stock oils, which include but are not limited to mineral-based, synthetic or mixtures thereof. Optionally, an inert carrier can be used if desired. Furthermore, other active ingredients, which provide a beneficial and desired function can also be included in the gel. In addition, solid, particulate additives such as the PTFE, MoS₂ and graphite can also be included.

Optionally, the dyes can be used and include halo-alkanes and the like. The dyes may be used alone or in combination. The dyes are present in the range of about 0% to about 90%, and in one embodiment in the range from about 0.0005% to about 50% and in another embodiment in the range from about 0.0025% to about 30% of the total weight of the additive gel.

Optionally, the bacterostatic agents can be used and include formaldehyde, gluteraldehyde and derivatives, kathan and the like. The bacterostatic agents may be used alone or in combination. The bacterostatic agents are present in the range of about 0% to about 90%, and in one embodiment in the range from about .0005% to about 50% and in another embodiment in the range from about .0025% to about 30% of the total weight of the additive gel.

The components are mixed together sequentially or all together to form a mixture. After mixing of the components of the gel, a cure may be required in order for gelation to occur. If a cure is required, it is typically done in the range of about 20°C to about 165°C for about 1 minute to about 60 days, preferably at about 50°C to about 120°C for about 1 to about 24 hours, more preferably at about 85°C to about 115°C for about 4 to about 12 hours.

### Specific Embodiment

Example 1 - Free Standing Additive Gel. A free standing additive gel that can control release an antioxidant into a fluid is prepared with the following formulation:

**Table 1 - Example 1 Composition**

| **Component** | % **Wt** |
|---|---|
| Ethylene-propylene diene monomer (EPDM) copolymer (with 92% diluent oil) | 7% |
| Overbased Ca(OH)2/ alkylbenzene sulfonate Detergent (with 42 % diluent oil) | 44% |
| Polyisobutenyl succinimide dispersant (w/ 47% dil oil) | 9% |
| Polyisobutenyl succinic anhydride (PIBSA) | 15% |
| Alkylated diphenylamine antioxidant (AO) | 25% |

The EPDM and detergent are mixed with a high speed, high shear mixer at 120°C to form Part A of the free standing gel. The dispersant, PIBSA and AO are mixed together to form Part B of the gel. Part A and Part B are then mixed with stirring and the mixture is poured into a 9 gram cure container. The resulting mixture is heated to 100°C and held at temperature for 12 hours. After the 12 hour cure, the material is cooled to room temperature and the resulting free standing additive gel is cleanly removed from the cure container, retaining its shape and dimensional integrity. Cone Pen (1/4 pen) = 70 tenths of mm and Tan Delta = 0.33.

Example 2 - Free Standing Additive Gel. A free standing additive gel that can control release an antioxidant into a fluid is prepared with the following formulation:

**Table 2 - Example 2 Composition**

| **Component** (including diluent oils as in Ex. 1) | % **Wt** |
|---|---|
| Ethylene-propylene diene monomer (EPDM) copolymer | 8% |
| Overbased Ca(OH)2/ alkylbenzene sulfonate Detergent | 50% |
| Polyisobutenyl succinimide dispersant | 9% |
| Polyisobutenyl succinic anhydride (PIBSA) | 15% |
| Alkylated diphenylamine antioxidant (AO) | 18% |

The EPDM and detergent are mixed with a high speed, high shear mixer at 120°C to form Part A of the free standing gel. The dispersant, PIBSA and AO are mixed together to form Part B of the gel. Part A and Part B are then mixed with stirring and the mixture was poured into a 9 gram cure container. The resulting mixture is heated to 100°C and held at temperature for 12 hours. After the 12 hour cure, the material is cooled to room temperature and the resulting free standing additive gel is cleanly removed from the cure container, retaining its shape and dimensional integrity. Cone Pen (1/4 pen) = 45 tenths of mm and Tan Delta = 0.21.

Comparative Example 3 - Additive Gel. An additive gel that can control release an antioxidant into a fluid, but which is not a free standing gel is prepared with the following formulation:

**Table 3 - Comparative Example 3 Composition**

| **Component** (including diluent oil as in Ex. 1) | % **Wt** |
|---|---|
| Overbased Ca(OH)2/ alkylbenzene sulfonate Detergent | 40% |
| Polyisobutenyl succinimide dispersant | 40% |
| Alkylated diphenylamine antioxidant (AO) | 20% |

The detergent is mixed with a high speed, high shear mixer at 120°C to form Part A of the free standing gel. The dispersant and AO are mixed together to form Part B of the gel. Part A and Part B are then mixed with stirring and the mixture is poured into a 9 gram cure container. The resulting mixture is heated to 100°C and held at temperature for 12 hours. After the 12 hour cure, the material is cooled to room temperature and the resulting additive gel can not be cleanly removed from the cure container without causing the gel to deform, crack and/or tear into multiple pieces. Cone Pen (1/4 pen) = 80 tenths of mm and Tan Delta = 0.34.

Except in the Examples, or where otherwise explicitly indicated, all numerical quantities in this description specifying amounts of materials, reaction conditions, molecular weights, number of carbon atoms, and the like, are to be understood as modified by the word "about." Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent, which may be customarily present in the commercial material, unless otherwise indicated. It is to be understood that the upper and lower amount, range, and ratio limits set forth herein may be independently combined. Similarly, the ranges and amounts for each element of the invention can be used together with ranges or amounts for any of the other elements. As used herein, the expression "consisting essentially of permits the inclusion of substances that do not materially affect the basic and novel characteristics of the composition under consideration.

In addition, all the embodiments described above have been contemplated as to their use, both alone and in combination, with all of the other embodiments described above, and these combinations are considered to be part of the present invention. The specific embodiments of amines and alcohols described above have been contemplated in combination with the specific embodiments of the carboxylic acids useful in the present invention.

## Claims

1. A free standing additive gel composition comprising:
a) a basic component comprising an overbased detergent;
b) an acidic component comprising
an ashless dispersant with a total acid number greater than 15 equivalents of KOH per gram of material, or a mixture of said ashless dispersant with a maleic anhydride styrene-copolymer or ester thereof; and
c) a polyolefin mixture comprising a polyolefin, a succinated polyolefin or mixtures thereof;
and further comprising:
d) at least one additive comprising viscosity modifier(s), friction modifier(s), detergent(s), cloud point depressant(s), pour point depressant(s), demulsifier(s), flow improver(s), anti static agent(s), dispersant(s), antioxidant(s), antifoam(s), corrosion/rust inhibitor(s), extreme pressure/antiwear agent(s), seal swell agent(s), lubricity aid(s), antimisting agent(s), or mixtures thereof;
wherein the free standing gel has a tan delta value of less than or equal to 0.330 and a cone pen value measured by ASTM D217 using a % pen of less than 75;
wherein component (a) is present from 30 to 70 %wt, component (b) is present from 5 to 25 %wt, component (c) is present from 5 to 30 %wt and component (d) is present from 1 to 50 % wt.

2. The composition of claim 1 wherein at least one other component can be added to the additive gel composition which is selected from the group consisting of base oils, inert carriers, dyes, bacteriostatic agents, solid particulate additives and mixtures thereof.

3. The composition of claim 1 wherein component (b), the acid component, comprises a maleic anhydride styrene-copolymer partially esterified with an alcohol or mixture of alcohols having 6 to 32 carbon atoms; and having an equivalent ratio of alcohol to acid groups from 0.1 to 0.99; and having a total acid number greater than 1 equivalents of KOH per gram of material, and having a blend oil viscosity at 10% by weight oil greater than 5 mm²/s (5 cSt) at 100°C.

4. The additive gel of claim 1 comprising an overbased detergent, a succinimide dispersant, a succinated polyolefin, and a friction modifier.

5. A process for supplying one or more additives to a functional fluid comprising contacting the functional fluid with an additive gel composition of claim 1.

6. The process of claim 5 wherein the functional fluid comprises hydraulic fluids, automatic transmission fluids, gear box fluids, manual transmission fluids, differential fluids, metalworking fluids, suspension system fluids, engine fluids, lubricating oils, engine oils, transmission fluids, greases, gear oils, antifreeze fluids, cooling system fluids, farm tractor fluids, transformer fluids, fuels, mechanical system fluids, industrial fluids, and combinations thereof.

7. The process of claim 5 wherein more than one free standing additive gel is used to additize the functional fluid and wherein the additive gels present may have identical, similar or different compositions and can be used in one or more locations in the functional fluid device.

8. The process of claim 5 wherein the free standing additive gel is positioned inside a fluid conditioning device which is utilized in an internal combustion engine, stationary engines, generators, diesel engines, gasoline engines, on highway engines, off highway engines, two cycle engines, aviation engines, piston engines, marine engines, railroad engines, biodegradable fuel engines, lubricating mechanical systems, gear boxes, automatic transmissions, manual transmissions, differentials, hydraulic systems, pumps, suspension systems, lubricant mechanical systems and combinations thereof.

## Patentansprüche

1. Frei stehende Zusatzstoff-Gelzusammensetzung, umfassend:
a) eine basische Komponente, umfassend ein überbasisches Detergens;
b) eine saure Komponente, umfassend:
ein aschefreies Dispergiermittel mit einer Gesamtsäurezahl von größer als 15 Äquivalente KOH pro Gramm Material oder ein Gemisch des aschefreien Dispergiermittels mit einem Maleinsäureanhydrid-Styrol-Copolymer oder Ester davon; und
c) ein Polyolefingemisch, umfassend ein Polyolefin, ein succiniertes Polyolefin oder Gemische davon;
und ferner umfassend:
d) wenigstens einen Zusatzstoff, umfassend Viskositätsmodifikator(en), Reibungsmodifikator(en), Detergens/Detergenzien, Trübungspunktsenkende(s) Mittel, Pourpoint-senkende(s) Mittel, Demulgator(en), Fließverbesserer, antistatische(s) Mittel, Dispergiermittel, Antioxidationsmittel, Antischaummittel, Korrosions-/Rosthemmer, Extremdruck-/Antiverschleißmittel, quellversiegelnde(s) Mittel, Gleithilfsmittel, Antibeschlagmittel und Gemische davon;
wobei das frei stehende Gel einen tan-delta-Wert von kleiner oder gleich 0,330 und einen Cone-Pen-Wert, gemessen nach ASTM D217 unter Verwendung eines 1/4-Pen, von kleiner als 75 aufweist;
wobei die Komponente (a) mit 30 bis 70 Gew.-% vorhanden ist, Komponente (b) mit 5 bis 25 Gew.-% vorhanden ist, Komponente (c) mit 5 bis 30 Gew.-% vorhanden ist und Komponente (d) mit 1 bis 50 Gew.-% vorhanden ist.

2. Zusammensetzung gemäß Anspruch 1, wobei wenigstens eine andere Komponente zu der Zusatzstoff-Gelzusammensetzung zugegeben werden kann, ausgewählt aus der Gruppe bestehend aus Grundölen, inerten Trägern, Farbstoffen, bakteriostatischen Mitteln, festen teilchenförmigen Zusatzstoffen und Gemischen davon.

3. Zusammensetzung gemäß Anspruch 1, wobei Komponente (b), die saure Komponente, ein Maleinsäureanhydrid-Styrol-Copolymer, teilverestert mit einem Alkohol oder einem Gemisch von Alkoholen mit 6 bis 32 Kohlenstoffatomen, umfasst; und ein Äquivalentverhältnis von Alkohol zu Säuregruppen von 0,1 bis 0,99 aufweist; und eine Gesamtsäurezahl von größer als 1 Äquivalent KOH pro Gramm Material aufweist und eine Ölgemisch-Viskosität bei 10 Gew.-% Öl von über 5 mm²/s (5 cSt) bei 100 °C aufweist.

4. Zusatzstoff-Gel gemäß Anspruch 1, umfassend ein überbasisches Detergens, ein Succinimid-Dispergiermittel, ein succiniertes Polyolefin und einen Reibungsmodifikator.

5. Verfahren zum Zuführen von einem oder mehreren Zusatzstoffen zu einem Funktionsfluid, umfassend Inkontaktbringen des Funktionsfluids mit einer Zusatzstoff-Gelzusammensetzung gemäß Anspruch 1.

6. Verfahren gemäß Anspruch 5, wobei das Funktionsfluid Hydraulikfluide, Automatikgetriebe-Fluide, Getriebekastenfluide, Handschaltgetriebe-Fluide, Differenzialgetriebe-Fluide, Metallbearbeitungsfluide, Suspensionssystemfluide, Motorfluide, Schmieröle, Motorenöle, Getriebefluide, Schmierfette, Getriebeöle, Frostschutzfluide, Kühlsystemfluide, Fluide für landwirtschaftliche Traktoren, Transformatorfluide, Kraftstoffe, Mechaniksystem-Fluide, Industriefluide und Kombinationen davon umfasst.

7. Verfahren gemäß Anspruch 5, wobei mehr als ein frei stehendes Zusatzstoff-Gel zum Zugeben zu dem Funktionsfluid verwendet wird und wobei die vorhandenen Zusatzstoff-Gele gleiche, ähnliche oder unterschiedliche Zusammensetzungen aufweisen können und an einem oder mehreren Orten der Funktionsfluideinheit verwendet werden können.

8. Verfahren gemäß Anspruch 5, wobei das frei stehende Zusatzstoff-Gel im Inneren einer Fluidkonditionierungseinheit angeordnet ist, die in einem innenliegenden Verbrennungsmotor, stationären Motoren, Generatoren, Dieselmotoren, Benzinmotoren, Straßenmotoren, Nicht-StraßenMotoren, Zweitaktmotoren, Flugmotoren, Kolbenmotoren, Schiffsmotoren, Eisenbahnmotoren, Motoren für bioabbaubaren Kraftstoff, zum Schmieren von mechanischen Systemen, in Getriebekästen, Automatikgetrieben, Handschaltgetrieben, Differenzialgetrieben, Hydrauliksystemen, Pumpen, Suspensionssystemen, mechanischen Schmiersystemen und Kombinationen davon verwendet wird.

## Revendications

1. Composition de gel d'additif autoportant comprenant :
a) un composant basique comprenant un détergent surbasique ;
b) un composant acide comprenant
un dispersant sans cendre ayant un indice d'acide total supérieur à 15 équivalents de KOH par gramme de matériau, ou un mélange dudit dispersant sans cendre avec un copolymère styrène-anhydride maléique ou un ester d'un tel composé ; et
c) un mélange de polyoléfines comprenant une polyoléfine, un succinate de polyoléfine ou des mélanges de tels composés,
et comprenant en outre :
d) au moins un additif comprenant un ou des modificateur (s) de viscosité, modificateur(s) de frottement, détergent(s), agent(s) abaissant le point de trouble, agent(s) abaissant le point d'écoulement, désémulsifiant(s), améliorateur(s) d'écoulement, agent(s) antistatique(s), dispersant(s), antioxydant(s), anti-mousse(s), inhibiteur(s) de corrosion/rouille, agent(s) extrême pression/anti-usure, agent(s) de gonflement des joints, adjuvant(s) d'onctuosité, agent(s) antibuée, ou des mélanges de tels composés ;
dans laquelle le gel autoportant a une valeur de tan delta inférieure ou égale à 0,330 et une valeur au pénétromètre à cône, mesurée par ASTM D217 en utilisant un pénétromètre ¼, inférieure à 75 ;
dans laquelle le composant (a) est présent à raison de 30 à 70 % en poids, le composant (b) est présent à raison de 5 à 25 % en poids, le composant (c) est présent à raison de 5 à 30 % en poids et le composant (d) est présent à raison de 1 à 50 % en poids.

2. Composition selon la revendication 1 dans laquelle au moins un autre composant peut être ajouté à la composition de gel d'additif, lequel est choisi dans le groupe constitué par les huiles de base, les véhicules inertes, les colorants, les agents bactériostatiques, les additifs particulaires solides et des mélanges de tels composants.

3. Composition selon la revendication 1 dans laquelle le composant (b), le composant acide, comprend un copolymère styrène-anhydride maléique partiellement estérifié avec un alcool ou mélange d'alcools comportant 6 à 32 atomes de carbone ; et présentant un rapport d'équivalents entre les groupes alcool et les groupes acide de 0,1 à 0,99 ; et possédant un indice d'acide total supérieur à 1 équivalent de KOH par gramme de matériau, et possédant une viscosité d'huile de mélange à 10% en poids d'huile supérieure à 5 mm²/s (5 cSt) à 100°C.

4. Gel d'additif selon la revendication 1 comprenant un détergent surbasique, un dispersant succinimide, un succinate de polyoléfine et un modificateur de frottement.

5. Procédé permettant d'introduire un ou plusieurs additifs dans un fluide fonctionnel comprenant la mise en contact du fluide fonctionnel avec une composition de gel d'additif selon la revendication 1.

6. Procédé selon la revendication 5 dans lequel le fluide fonctionnel comprend des fluides hydrauliques, des fluides de transmission automatique, des fluides de boîte de vitesse, des fluides de transmission manuelle, des fluides de différentiel, des fluides de travail des métaux, des fluides de système de suspension, des fluides pour moteur, des huiles lubrifiantes, des huiles pour moteur, des fluides de transmission, des graisses, des huiles d'engrenage, des fluides antigel, des fluides de systèmes de refroidissement, des fluides de tracteurs agricoles, des fluides de transformateur, des carburants, des fluides pour systèmes mécaniques, des fluides industriels, et leurs combinaisons.

7. Procédé selon la revendication 5 dans lequel plus d'un gel d'additif autoportant est utilisé pour additiver le fluide fonctionnel et dans lequel les gels d'additif présents peuvent avoir des compositions identiques, semblables ou différentes et peuvent être utilisés en un ou plusieurs endroits dans le dispositif de fluide fonctionnel.

8. Procédé selon la revendication 5 dans lequel le gel d'additif autoportant est placé à l'intérieur d'un dispositif de conditionnement de fluide qui est employé dans un moteur à combustion interne, des moteurs stationnaires, des générateurs, des moteurs diesel, des moteurs à essence, des engins motorisés pouvant rouler sur la voie publique, des engins motorisés non autorisés à rouler sur la voie publique, des moteurs à deux temps, des moteurs d'avion, des moteurs à piston, des moteurs marins, des moteurs ferroviaires, des moteurs à carburant biodégradable, des systèmes mécaniques lubrifiants, des boîtes de vitesse, des transmissions automatiques, des transmissions manuelles, des différentiels, des systèmes hydrauliques, des pompes, des systèmes de suspension, des systèmes mécaniques de lubrifiant, et leurs combinaisons.
